# EUROPEAN PATENT APPLICATION

(11) **EP 2 651 012 A2**
(43) Date of publication of application: **16.10.2013**
(21) Application number: 13162864.6
(22) Date of filing: 09.04.2013
(51) Int. Cl.: H02K 5/04, F02N 15/00, F02C 7/268

(54) **Housing for an electrical starter motor**

(30) Priority: 13.04.2012 US 201213446881
(71) Applicant: Hamilton Sundstrand Corporation, Windsor Locks, CT 06096-1010 (US)
(72) Inventor: LeGros, Craig R., Rockford, IL Illinois 61109 (US)
(74) Representative: Bridge, Kerry Ann

(57) **Abstract**

A housing, 30, for an electrical device includes an interior surface, 44, and one or more stress reducing notches, 42. The interior surface, 44, is configured to interface with one or more internal components of the motor. The one or more stress reducing notches, 42, are located along the interior surface, 44, of the housing, 30.

## Description

### BACKGROUND

The present application relates to gas turbine engines, and more particularly to a housing for an electrical starter and/or motor for use with gas turbine engines.

Current starting systems for gas turbine engines include electrical, pneumatic, and hydraulic based starting systems. Electrical based starter systems offer several advantages over pneumatic or hydraulic based starter systems in that they tend to be more compact, have lower cost, and higher reliability. Additionally, electrical starter systems offer improved speed/torque control for starting, re-engagement, and motoring.

A conventional electrical starter includes a central rotor shaft surrounded by a stationary winding (stator). The rotor is supported at each end by bearings. The stator is supported within an outer housing of the motor. Typically, stators are constructed from a lamination stack of metallic elements, which are configured to abut one another and are arranged axially along the length of the rotor shaft outward of the rotor.

One factor in the effectiveness of electrical starter systems is the ability of the motor to convert electromagnetic forces into useful output torque. Useful output torque is maximized when the stator-armature gap provides a flux path having a minimal reluctance. In addition, the magnetization characteristics including the magnetic field (B) and the magnetizing field (H) of the stator lamination material are maximized.

In an effort to minimize reluctance and maximize the B-H material coefficients, the interface between the stator lamination stack and an inner surface of the outer housing is precision press fit. However, such precision press fitting can have unintended consequences. For example, under certain operating conditions, such as a cold start operation, the hoop stress of the laminations is significantly increased because of the generation of a contact stress due to differences between the thermal coefficient of expansion of the outer housing material and the laminations. Increased hoop stress reduces the performance of the starter. Thus, a larger starter than is desirable may be required in order to develop sufficient torque to actuate the gas turbine engine. The larger starter contributes undesirable properties such as additional size and weight to the gas turbine engine and the starter system (including the motor, feeders, and motor controller).

### SUMMARY

A housing for an electrical device includes an interior surface and one or more stress reducing notches. The interior surface is configured to interface with one or more internal components of the motor. The one or more stress reducing notches are located along the interior surface of the housing.

In another aspect, a starter motor includes a housing and a plurality of stator laminations. The housing has one or more stress reducing notches therein located along an interior surface of the housing. The stator laminations are disposed within the housing and interface with at least a portion of the interior surface.

In yet another aspect, an assembly for a gas turbine engine includes an accessory gearbox and a starter motor. The starter motor is mounted to the accessory gearbox and includes a plurality of stator laminations and a housing having one or more stress reducing notches therein. The notches are located along an interior surface of the housing. The stator laminations are disposed within the housing and interface with at least a portion of the interior surface.

### BRIEF DESCRIPTION OF THE DRAWINGS

FIG. 1 is a block diagram of a gas turbine engine including a starter motor and clutch.

FIG. 2 is a longitudinal cross-sectional view of one embodiment of the starter motor.

FIG. 3 is a cross-sectional view of the starter motor taken along line 2-2 of FIG. 2.

### DETAILED DESCRIPTION

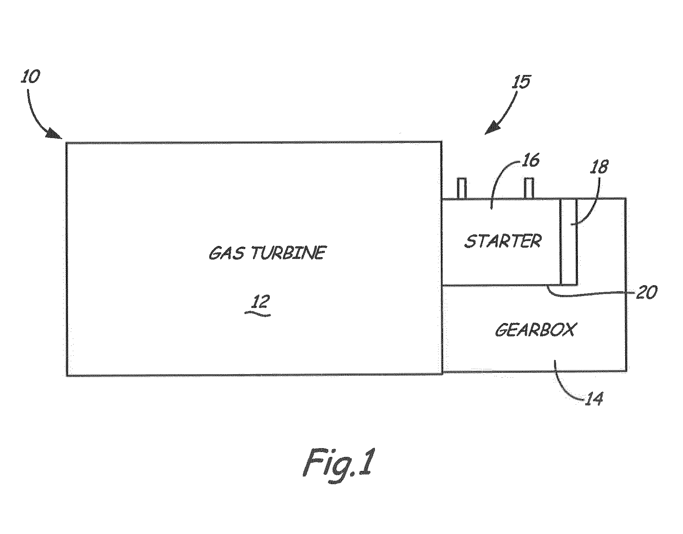

FIG. 1 illustrates a schematic block view of a gas turbine engine assembly 10 for industrial or aircraft application. The gas turbine assembly 10 includes a gas turbine engine 12, an accessory gearbox 14, an electrical device 15 such as an electric starter motor 16, and a clutch 18.

Accessory gearbox 14 is mounted to gas turbine engine 12 to initiate rotation thereof. As described in United States Patent 7,131,275, which is incorporated herein by reference, electric starter motor 16 operates to drive accessory gearbox 14. In the embodiment shown in FIG. 1, starter motor 16 drives accessory gearbox 14 through clutch 18. Clutch 18 can be contained within electric starter motor 16 housing (not shown) or external thereto. In one embodiment, clutch 18 is a high speed overrunning clutch. Ideally, starter motor 16 fits completely upon the accessory gear box 14 thereby reducing the packaging space of system 10. It should be understood that the embodiment shown is only an exemplary component arrangement, other arrangements will benefit from the instant invention. The invention is generally applicable to any electrical device 15 (including motors, starters, generators, tachometers, resolvers, alternators, etc.) with stator laminations that interface with an outer housing of the apparatus.

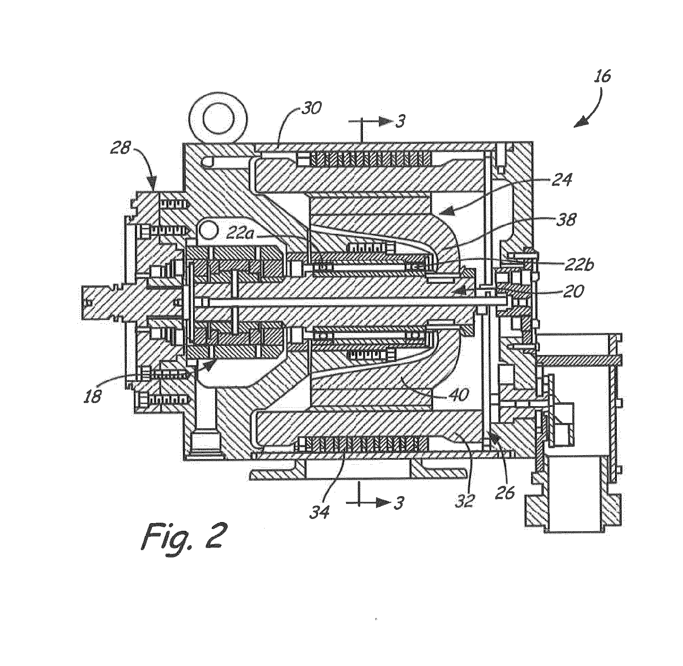

FIG. 2 shows a cross-sectional view of starter motor 16 taken along an axis of rotation of a shaft 20. In addition to clutch 18 and shaft 20, starter motor 16 includes bearings 22a and 22b, a rotor 24, a stator 26, an end mount housing 28, and an outer housing 30. Stator 26 includes windings 32 and laminations 34.

Shaft 20 is mounted to inner portions 36 of outer housing 30 via bearings 22a and 22b. Bearings 22a and 22b are located adjacent rotor 24. That is, the bearings 22a and 22b are disposed radially interior (with respect to centerline C_{L} axis of shaft 20) of rotor 24. Clutch 18 is mounted on shaft 20 within a cavity formed adjacent rotor 24 and end mount housing 28. End mount housing 28 can have various configurations as desired in order to mount on accessory gearbox 14 (FIG. 1).

In the embodiment shown in FIG. 2, rotor 24 is mounted to shaft 20. Rotor 24 is hollow and has a base portion 38 and an annular rotor portion 40 extending from the base portion 38. The base portion 38 is substantially transverse to the center line axis C_{L} and the annular rotor portion 40 is substantially parallel to the center line axis C_{L}. The base portion 38 is mounted near an aft end of shaft 20.

Stator 26 is mounted radially outward of rotor 24 with respect to the center line axis C_{L} of shaft 20. Thus, stator 26 is disposed between rotor 24 and outer housing 30. More particularly, windings 32 of stator 26 are disposed adjacent rotor 24 while laminations 34 abut portions of outer housing 30. Housing 30 comprises an enclosure which interfaces with laminations 34 of stator 26 and also extends to enclose other interior components of starter motor 16.

Windings 32 are disposed within laminations 34 and can include copper wire or other conductive filaments. In the embodiment shown, laminations 34 comprise a plurality of generally annular segments which are disposed to abut one another. Laminations 34 can be constructed from suitable magnetic materials. In one embodiment, the laminations 34 comprise an iron-cobalt-vanadium soft magnetic alloy.

During operation rotor 24 rotates with shaft 20 within stator 26. In particular, rotor 24 is configured to rotate about the center line axis C_{L} relative to the stator 16, so that a gap (not shown) is maintained between the two components to form part of a magnetic flux path. An excitation current creates a magnetomotive force to drive magnetic flux in the closed magnetic flux path. The magnetic flux attracts rotor 24 toward the stator 26, according to well known principles of magnetism, and tends thus to urge the rotor 24 either clockwise or counterclockwise to create a working torque output.

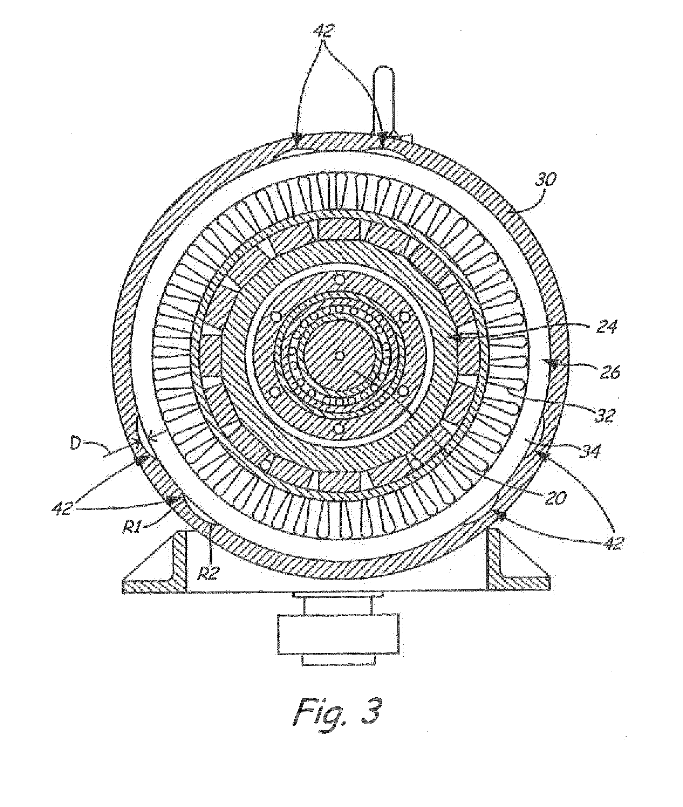

FIG. 3 shows different cross-sectional view of starter motor 16. As shown in FIG. 3, various fluid passageways communicate fluids around various components for proper lubrication, cooling, airflow, etc. In addition to illustrating various components previously described, FIG. 3 illustrates a plurality of notches 42.

Notches 42 are formed in outer housing 30 adjacent laminations 34 along an interior surface 44 of outer housing 30. As illustrated in FIG. 3, laminations 34 comprise a continuous hoop design that provides for an uninterrupted outer surface designed to interface with interior surface 44 of outer housing 30. Notches 42 provide for an air gap between outer housing 30 and laminations 34. In the embodiment shown, notches 42 are shaped like a scallop and smoothly transition to and from a maximum depth D with fillets having substantially equal radii R₁ and R₂. Notches 42 extend along the axial length (with respect to the centerline axis C_{L} of shaft 20 (FIG.2)) of outer housing 30 along the entire length of stator 26 (FIG. 2). Notches 42 are machined or otherwise formed in outer housing 30 using known manufacturing techniques. In the embodiment shown, outer housing 30 has a generally uniform cross-sectional area. Thus, notches 42 are symmetrically circumferentially spaced about interior surface 44. In other embodiments, such as embodiments where outer housing 30 has a non-uniform cross-sectional area, notches 42 would be located in a non-symmetrical circumferential position along interior surface 44 and may have differing shapes including varying maximum depths or varying radii.

Therefore, the depth, circumferential position along the interior surface 44, and the circumferential extent and shape of notches 42 depends upon the size and shape of outer housing 30. Stress analysis can be performed utilizing finite element method on commercially available software to determine the location, shape, and size of notches 42 within outer housing 30.

Notches 42 reduce contact stresses between laminations 34 and outer housing 30 due to differences between the thermal coefficient of expansion of laminations 34 and outer housing 30. Thus, the hoop stress within the laminations 34 (which results from the contact stresses between the laminations 34 and outer housing 30) is reduced. This allows the size of the starter motor 16 to be maintained at a smaller size (even with the starter motor 16 subjected to cold start operations) than would otherwise be achievable. Thus, the starter motor 16 does not contribute an inordinate amount to the size and weight of the gas turbine engine assembly 10 (FIG. 1).

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A housing (30) for an electrical device comprising:
an interior surface (44) configured to interface with one or more internal components of the motor; and
one or more stress reducing notches (42) located along the interior surface (44) of the housing (30).

2. The housing of claim 1, further comprising:
one or more stator laminations (34) disposed within the housing (30) and interfacing with at least a portion of the interior surface (44), wherein each of the notches (42) create an air gap between the housing (30) and the stator laminations (34).

3. The housing of claim 2, wherein the notches (42) are located along the interior surface (44) at one or more circumferential locations in order to reduce contact stress between the housing (30) and stator laminations (34) which results from the housing (30) and stator laminations (34) having different thermal coefficients of expansion.

4. A motor comprising:
a housing (30) having one or more stress reducing notches (42) therein located along an interior surface (44) of the housing (30); and
a one or more of stator laminations (34) disposed within the housing (30) and interfacing with at least a portion of the interior surface (44), wherein each of the notches (42) creates an air gap between the housing (30) and the stator laminations (34).

5. The motor of claim 4, wherein the notches (42) are located along the interior surface (44) at one or more circumferential locations in order to reduce contact stress between the housing (30) and stator laminations (34) which results from the housing and stator laminations having different thermal coefficients of expansion.

6. The housing of claim 2 or the motor of claim 4, wherein the stator laminations (34) comprise a continuous hoop design that provides for an uninterrupted outer surface design to interface with the interior surface of the housing.

7. The housing of claim 2 or the motor of claim 4, wherein the notches (42) extend axially along the interior surface (44) so as to interface with the stator laminations (34).

8. The housing of claim 1 or the motor of claim 4, wherein the notches (42) are symmetrically circumferentially spaced along the interior surface (44).

9. The housing of claim 1 or the motor of claim 4, wherein the motor comprises a starter motor for a gas turbine engine.

10. The housing of claim 1 or the motor of claim 4, wherein the notches (42) have a scallop shape with fillets having substantially equal radii.

11. An assembly for a gas turbine engine comprising:
an accessory gearbox (14); and
a starter motor (16) mounted to the accessory gearbox (14), wherein the starter motor (16) includes a housing (30) having one or more stress reducing notches (42) therein located along an interior surface (44) of the housing, and wherein the starter motor (16) has a plurality of stator laminations (34) disposed within the housing (30) and interfacing with at least a portion of the interior surface (44).

12. The assembly of claim 11, wherein the notches (42) extend axially along the interior surface so as to interface with the stator laminations (34).

13. The assembly of claim 11, wherein the notches (42) are symmetrically circumferentially spaced along the interior surface (44).

14. The assembly of claim 11, wherein the notches (42) are located along the interior surface (44) at one or more circumferential locations in order to reduce contact stress between the housing (30) and stator laminations (34) which results from the housing (30) and stator laminations (34) having different thermal coefficients of expansion.

15. The assembly of claim 11, wherein the stator laminations (34) comprise a continuous hoop design that provides for an uninterrupted outer surface design to interface with the interior surface (44) of the housing (30).
